# EUROPÄISCHE PATENTSCHRIFT

(11) **EP 0 594 876 B1**
(45) Veröffentlichungstag und Bekanntmachung des Hinweises auf die Patenterteilung: **26.04.1995**
(21) Anmeldenummer: 92118232.5
(22) Anmeldetag: 24.10.1992
(51) Int. Cl.: B62B 3/06, B62D 13/04

(54) **Hubwagen**
Lifting dolly
Chariot élévateur

(43) Veröffentlichungstag der Anmeldung: 04.05.1994
(73) Patentinhaber: NIEMETZ-METALL GmbH, D-96187 Stadelhofen (DE)
(72) Erfinder: Niemetz, Hermann, W-8601 Königsfeld (DE)
(74) Vertreter: LOUIS, PÖHLAU, LOHRENTZ & SEGETH

(56) Entgegenhaltungen:
- DE-A- 3 711 662
- GB-A- 165 803
- GB-A- 820 228
- US-A- 2 388 692

## Beschreibung

Die Erfindung betrifft einen Hubwagen mit einer Grundeinrichtung, einer Lastauflageeinrichtung, die an der Grundeinrichtung angeordnet und mittels einer Hebeeinrichtung in bezug auf die Grundeinrichtung höhenverstellbar ist, einer Lenkeinrichtung, die zum Lenken des Hubwagens und zur Betätigung der Hebeeinrichtung vorgesehen ist, und einem Verbindungselement, mittels welchem die Lenkeinrichtung mit Rädern der Grundeinrichtung zu deren Zwangslenkung verbunden ist, wobei am rückseitigen Endabschnitt der Grundeinrichtung in der Nachbarschaft der Lenkeinrichtung erste Räder um vertikale Lenkachsen drehbar gelagert sind und am vorderseitigen Endabschnitt der Grundeinrichtung mindestens ein zweites Rad um eine vertikale Lenkachse drehbar gelagert ist.

Ein derartiger Hubwagen ist aus der DE 37 11 662 C2 der Anmelderin bekannt. Bei diesem bekannten Hubwagen sind alle Räder miteinander mittels eines Verbindungselementes verbunden, was sich auf die Lenkbarkeit des Hubwagens entsprechend auswirkt, so daß es entlang enger und scharf gekrümmter Transportwege zu Problemen kommen kann.

Aus der GB 820 228 ist ein Hubwagen bekannt, bei dem die von der Lenkeinrichtung entfernten zweiten Räder mit Hilfe der Lenkeinrichtung lenkbar sind, so daß sich eine gute Lenkbarkeit bzw. Wendigkeit ergibt. Dort ist die Lastauflageeinrichtung mit zwei Gabelzinken versehen, die als freikragende Elemente ausgebildet sind. Die Gabelzinken müssen deshalb sehr kompakt und stabil ausgebildet sein, wenn mit einem solchen Hubwagen relativ schwere Güter umgesetzt, d.h. transportiert werden sollen. Das wirkt sich jedoch auf die Bauhöhe des Hubwagens bzw. die Unterfahrhöhe von Grundeinrichtung und Lastauflageeinrichtung aus, so daß eine Mindest-Unterfahrhöhe mit diesem bekannten Hubwagen nicht unterschritten werden kann.

Ähnliche Überlegungen gelten für den aus dem DE GM 87 07 686 bekannten Hubwagen, bei welchem die Lastauflageeinrichtung ebenfalls mit zwei freikragenden Gabelzinken ausgebildet ist.

Aus der US 3 836 027 ist ein Hubwagen mit Radpaaren bekannt, von denen ein Radpaar um zueinander parallele vertikale Achsen lenk- bzw. schwenkbar ist, um den Hubwagen lenken zu können. Das zweite Radpaar ist an der Grundeinrichtung starr vorgesehen, was die Lenkbarkeit dieses Hubwagens beeinträchtigt. Diese Beeinträchtigung der Lenkbarkeit ist dort jedoch nicht erheblich, weil dieser Hubwagen insbesondere dazu vorgesehen ist, von einem Lastkraftwagen ein Rad abmontieren bzw. durch ein neues Rad ersetzen zu können. Zu diesem Zweck wird der Hubwagen einfach geradlinig zur entsprechenden Achse des Lastkraftwagens hingefahren, so daß eine nur bedingte Lenkbarkeit des Hubwagens ausreichend ist.

Hubwagen, bei welchen alle an der Grundeinrichtung vorgesehenen Räder miteinander mittels eines geeigneten Verbindungselementes verbunden und somit allesamt zwangslenkbar sind, sind beispiels weise auch aus der DE-PS 409 237, aus der DE-AS 1 067 475, aus der DE-PS 1 067 475 oder aus der DD 40 438 bekannt.

Der Erfindung liegt die Aufgabe zugrunde, einen Hubwagen der eingangs genannten Art zu schaffen, der eine ausgezeichnete Wendigkeit bei einem sehr guten Bedienungskomfort aufweist, und mit dem es einfach möglich ist, Güter zu unterfahren, hochzuheben und zu verfahren, die nur einen niedrigen Unterfahrraum aufweisen.

Diese Aufgabe wird erfindungsgemäß dadurch gelöst, daß nur das mindestens eine am vorderseitigen Endabschnitt der Grundeinrichtung vorgesehene zweite Rad zur Zwangslenkung mittels des Verbindungselementes mit der Lenkeinrichtung verbunden ist, daß die zur Lenkeinrichtung benachbarten ersten Räder als freilenkbare Räder mit einer gegen die zugehörige vertikale Lenkachse seitlich versetzten horizontalen Lageachse ausgebildet sind, und daß die Lenkeinrichtung mittels einer Arretiereinrichtung an der Grundeinrichtung entsprechend einem gewünschten Lenkeinchlag festsetzbar ist. Insbesondere durch die an der Lenkeinrichtung vorgesehene Arretiereinrichtung ist es einfach möglich, die Lenkeinrichtung mit der Lastauflageeinrichtung bzw. der Grundeinrichtung als Hebelübersetzung einzusetzen, wobei der Lastarm dieser Hebelübersetzung durch das mindestens eine zweite Rad und die Lenkachse der Lenkeinrichtung und der Kraftarm durch den Abstand zwischen der besagten vertikalen Lenkachse der Lenkeinrichtung und einem an der Lenkeinrichtung überlicherweise vorgesehenen Handgriff gegeben ist. Diese Hebelübersetzung resultiert daraus, daß das mindestens eine von der Lenkeinrichtung entfernte zweite Rad mit Hilfe der Lenkeinrichtung in eine bestimmte Lenkstellung eingestellt ist, wobei diese Lenkstellung jederzeit genau der Lenkstellung der Lenkeinrichtung entspricht, was als vorteilhaft anzusehen ist, und weil gleichzeitig die zur Lenkeinrichtung benachbarten ersten Räder frei lenkbar und somit frei beweglich bleiben. Daraus resultiert auch der weitere ganz erhebliche Vorteil, daß der erfindungsgemäße Hubwagen eine ausgezeichnete Wendigkeit und Lenkbarkeit besitzt, weshalb er insbesondere zum Umsetzen bzw. zum Transport von Gütern auf engstem Raum geeignet ist. Hierbei kann es sich beispielsweise um die Ladefläche eines Lastkraftwagens handeln, auf welcher Güter auf sogenannten Euro-Paletten ruhen. Mit dem erfindungsgemäßen Hubwagen können solche Euro Paletten problemlos unterfahren und angehoben werden, um die besagten Güter umsetzen zu können.

Beim erfindungsgemäßen Hubwagen kann die Grundeinrichtung und die Lastauflage einschenkellig ausgebildet sein, besonders zweckmäßig ist es jedoch, wenn die Grundeinrichtung und die Lastauflage beim erfindungsgemäßen Hubwagen zweischenkelig, d.h. mit zwei Gabelzinken, ausgebildet sind, weil es mit einem solchermaßen ausgebildeten Hubwagen einfach möglich ist, beispielsweise die oben erwähnten Euro-Paletten zu unterfahren und danach zuverlässig, d.h. kippsicher, anzuheben, um die auf einer solchen Euro-Palette ruhenden Güter umzusetzen.

Als vorteilhaft hat es sich erwiesen, wenn beim erfindungsgemäßen Hubwagen die Grundeinrichtung - wie bereits erwähnt worden ist - ein- oder zweischenkelig ausgebildet ist, wobei der/jeder Schenkel ein Balkenelement mit einem Rechteck-Hohlprofil aufweist, und wenn die Lastauflage der Grundeinrichtung entsprechend ein- oder zweischenkelig ausgebildet ist, wobei der entsprechende Schenkel der Lastauflage ein oberseitiges Auflageteil und von diesem seitlich nach unten stehende Seitenteile aufweist, wobei der/jeder Schenkel der Lastauflage in bezug auf den zugehörigen Schenkel der Grundeinrichtung derartig vorgesehen ist, daß zwischen den Seitenteilen des mindestens einen Schenkels der Lastauflage und dem entsprechenden Balkenelement der Grundeinrichtung ein Zwischenraum gegeben ist, entlang welchem sich die Verbindungseinrichtung mit einem entsprechenden Längenabschnitt erstreckt. Durch die Ausbildung des entsprechenden Balkenelementes der Grundeinrichtung mit einem Rechteck-Hohlprofil ergibt sich nicht nur eine Gewichtseinsparung, sondern gleichzeitig eine ausgezeichnete mechanische Stabilität der Grundeinrichtung, wobei das besagte Rechteck-Hohlprofilmaterial gleichzeitig auch zum Schutz des die Lenkeinrichtung mit dem mindestens einem zweiten Rad verbindenden Verbindungselementes bzw. eines entsprechenden Abschnittes desselben dient. Demselben Zweck dient die Ausbildung des entsprechenden Schenkels der Lastauflage mit dem oberseitigen Auflageteil und den beiden seitlich nach unten stehenden Seitenteilen. Durch ein solches nach unten offenes U-Profil des entsprechenden Schenkels der Lastauflage ergibt sich nicht nur eine entsprechende mechanische Versteifung der Lastauflage, sondern gleichzeitig auch ein Schutz des genannten Längenabschnittes des Verbindungselementes, mittels welchem die Lenkeinrichtung mit dem mindestens einem zweiten Rad des Hubwagens verbunden ist.

Das/jedes zweite zwangsgelenkete Rad ist vorzugsweise an einem Radkranz um eine horizontale Lagerachse drehbar gelagert, der an einer Lagerschale um die zugehörige vertikale Lenkachse drehbar gelagert ist, wobei die Lagerschale am vorderen Ende des entsprechenden Balkenelementes der Grundeinrichtung befestigt ist und die Lastauflage die Lagerschale mit einem Vorderabschnitt überdeckt und das flächige Auflageteil der Lastauflage im Bereich über dem zugehörigen zweiten Rad mit einem Loch ausgebildet ist. Eine derartige Ausbildung des Hubwagens weist den Vorteil auf, daß mit ihm relativ niedrige Spalträume, wie sie beispielsweise bei Euro-Paletten gegeben sind, problemlos unterfahren werden können.

Eine stabile Ausbildung des Hubwagens ergibt sich dadurch, daß der Vorderabschnitt der/jeder Lastauflage mit der zugehörigen Lagerschale für das zweite Rad und somit mit der Grundeinrichtung durch Schwenkhebel verbunden ist.

Eine einfache, betriebszuverlässige Ausbildung des Hubwagens wird erreicht, wenn der/jeder Radkranz ein Zahnradkranz ist, in welchen eine das Verbindungselement bildende endlose Gliederkette eingreift, wobei das Niveau der Zahnung des Zahnradkranzes an das Niveau des Rechteck-Hohlprofils des entsprechenden Balkenelementes der Grundeinrichtung angepaßt ist und das Verbindungselement bzw. die Gliederkette sich mit einem entsprechenden Längenabschnitt durch das/jedes Balkenelement hindurch erstreckt. Auf diese Weise ist das Verbindungselement, d.h. die Gliederkette, durch das entsprechende Balkenelement geschützt - wie bereits weiter oben ausgeführt worden ist.

Als zweckmäßig hat es sich erwiesen, wenn beim erfindungsgemäßen Hubwagen die Lenkeinrichtung einen an einem mit der Grundeinrichtung verbundenen Lagerelement um eine vertikale Lenkachse drehbaren Radkranz aufweist, der mit dem Verbindungselement verbunden ist, wobei der Radkranz mit einem Fußteil eines Hand- bzw. Betätigungsgriffes der Lenkeinrichtung verbunden ist und die Arretiereinrichtung zwischen dem Fußteil und dem Lagerelement vorgesehen ist. Mit Hilfe der besagten Arretiereinrichtung ist es einfach möglich, die Lenkeinrichtung und demzufolge das mindestens eine zweite Rad des Hubwagens festzusetzen, d.h. temporär unlenkbar zu machen, um über die Lenkeinrichtung auf den Hubwagen eine entsprechende Kraft und folglich um das mindestens eine zwangsgelenkte und folglich quasi ortsfeste zweite Rad herum ein entsprechendes Dreh- bzw. Schwenkmoment auszuüben. Die Arretierung der Lenkeinrichtung kann beispielsweise durch Reibungsschluß oder durch eine geeignete Klemmverbindung erfolgen; als vorteilhaft hat es sich jedoch erwiesen, wenn das an der Grundeinrichtung befestigte Lagerelement mit Löchern ausgebildet ist, die zur Lenkachse konzentrisch vorgesehen und voneinander gleichmäßig beabstandet sind, und wenn das Fußteil der Lenkeinrichtung mit einem federnden Einrastelement der Arretiereinrichtung ausgebildet ist, das mit einem am Handgriff vorgesehenen Betätigungsorgan verbunden und mit dem Betätigungsorgan zwischen einer in eines der Löcher einrastenden Arretierstellung und einer Freigabestellung verstellbar ist. Durch eine solche Ausbildung ergibt sich ein einfach zu bedienender Hubwagen mit festsetzbarer Lenkeinrichtung.

Ein einfacher Aufbau des Hubwagens ergibt sich, wenn die Grundeinrichtung mit einem rinnenförmigen Führungsabschnitt zur geeigneten Umlenkung und Führung des Verbindungselementes ausgebildet ist. Durch diesen rinnenförmigen Führungsabschnitt kann auf Umlenkrädern zur Führung des Verbindungselementes verzichtet werden, was sich auf den baulichen Aufwand des Hubwagens vorteilhaft auswirkt, ohne daß durch den besagten Führungsabschnitt der Lenkungskomfort merklich beeinträchtigt würde.

Als besonders vorteilhaft hat esd sich erwiesen, wenn nicht nur das mindestens eine zweite Rad zwangsgelenkt bzw. temporär unlenkbar ist, sondern wenn außerdem auch die zur Lenkeinrichtung benachbarten ersten Räder vorübergehend nicht frei lenkbar sind. Das kann erfindungsgemäß dadurch erreicht werden, daß jedes zur Lenkeinrichtung benachbarte erste Rad mit einer Lenksperre ausgebildet ist, die mittels einer von der jeweiligen Radstellung unabhängigen Betätigungseinrichtung zwischen einer Freilenkstellung und einer Lenksperrstellung verstellbar ist. Ein derartig ausgebildeter Hubwagen, für den ein selbständiger Patentschutz beantragt wird, kann an einem entsprechenden Ort unlenkbar abgestellt werden. Um bei einem solchen unlenkbar abgestellten Hubwagen außerdem auch eine Rollbewegung zu verhindern, d.h. den Hubwagen absolut unbeweglich abstellen zu können, ist es vorteilhaft, wenn jede Lenksperre mit einer Radbremseinrichtung in Wirkverbindung bringbar ist. Bei einem derartigen Hubwagen ist es also mit Hilfe der zuletzt erwähnten, jederzeit gut zugänglichen Betätigungseinrichtung möglich, den Hubwagen in seine Freilenkstellung einzustellen, in welcher die ersten Räder frei lenkbar sind, bzw. die Betätigungseinrichtung in die Lenksperrstellung zu stellen, in welcher die normalerweise frei lenkbaren ersten Räder nicht länger um die jeweils zugehörige vertikale Lenkachse herum lenkbar sind, wobei die Lenksperrstellung der zweiten Räder von der Lenkstellung des mindestens einen zwangsgelenkten ersten Rades in vorteilhafter Weise unabhängig ist, bzw. mit Hilfe der Betätigungseinrichtung die Lenksperre und gleichzeitig die Radbremseinrichtung zu aktivieren, und nicht nur eine Lenkung der überlicherweise frei lenkbaren ersten Räder, sondern gleichzeitig auch eine Drehung der Räder um ihre horizontale Radachsen zu verhindern, was bedeutet, daß der Hubwagen absolut ortsfest an einem entsprechenden Ort steht. Durch die besagte Betätigungseinrichtung zur Verstellung des Hubwagens zwischen der Freilenkstellung, der Lenksperrstellung bzw. der Radbremsstellung ergibt sich ein sehr guter Einsatzkomfort, wobei es - wie bereits ausgeführt worden ist - einfach und problemlos möglich ist, die Betätigungseinrichtung gut zugänglich vorzusehen, so daß sie jederzeit einfach und in jeder Radstellung unabhängig betätigt werden kann.

Als vorteilhaft hat es sich erwiesen, wenn jedes freilenkbare erste Rad an einer an der Grundeinrichtung um die zugehörige vertikale Lenkachse drehbar gelagerten Winkelgabel gelagert ist, die an einem oberseitigen Plattenteil Durchgangslöcher aufweist, die zur vertikalen Lenkachse konzentrisch und die voneinander äquidistant beabstandet vorgesehen sind, wenn an der Grundeinrichtung ein federndes Organ vorgesehen ist, das zwischen der Freilenkstellung und der Lenksperrstellung verstellbar ist, und wenn auf der dem federnden Organ gegenüberliegenden Seite des Plattenteils der Winkelgabel ein Tellerelement vorgesehen ist, das mit der von der jeweiligen Radstellung unabhängigen Betätigungseinrichtung verbunden ist und das Finger aufweist, die in der Freilenkstellung die Durchgangslöcher bündig ausfüllen und die in der Lenksperrstellung gegen die Durchgangslöcher zurückversetzt sind, so daß das federnde Organ in eines der Durchgangslöcher einrasten kann. Bei einem Hubwagen der zuletzt genannten Art ist es vorteilhaft, wenn die mit dem Tellerelement verbundene Betätigungseinrichtung zwischen der Freilenkstellung, der Lenksperrstellung und einer Bremsstellung verstellbar ist, wobei das Tellerelement in der Bremsstellung mit einem Bremselement des entsprechenden ersten Rades zusammenwirkt. Auf diese Weise ergibt sich - wie bereits weiter oben erwähnt worden ist - ein Hubwagen mit ausgezeichneter Beweglichkeit und Wendigkeit bzw. ein Hubwagen, der sehr gut und einfach lenkbar ist, und mit welchem umzusetzende Güter niedrigen Unterfahrraumes problemlos unterfahren, angehoben und relativ kraftsparend umgesetzt werden können. Ein weiterer Vorteil des erfindungsgemäßen Hubwagenes besteht darin, daß er durch entsprechende einfache Betätigung an einem beliebigen Ort zuverlässig unbeweglich abstellbar ist.

Weitere Einzelheiten, Merkmale und Vorteile ergeben sich aus der nachfolgenden Beschreibung der wichtigsten Einzelteile einer bevorzugten Ausführungsform des erfindungsgemäßen Hubwagens. Es zeigen:
- Figur 1: eine Teilansicht einer Grundeinrichtung und einer Lastauflageeinrichtung, die zweischenkelig ausgebildet sind, wobei jedoch nur einer der beiden Schenkel dargestellt ist, in Blickrichtung von oben, wobei auf die Darstellung der Lenkeinrichtung des Hubwagens und seiner ersten und zweiten Räder verzichtet worden ist, während das die Lenkeinrichtung mit den zweiten Rädern verbindende Verbindungselement abschnittweise als Gliederkette gezeichnet ist,
- Figur 2: eine Seitenansicht in Blickrichtung des Pfeiles II in Figur 1, wobei in Figur 2 außer der Grundeinrichtung und der Lastauflageeinrichtung auch die Hebeeinrichtung gezeichnet ist, mit deren Hilfe die Lastauflageeinrichtung in bezug auf die Grundeinrichtung höhenverstellbar ist,
- Figur 3: eine vergrößerte Darstellung entsprechend der in Figur 2 gezeichneten, zur Verdeutlichung der Hebeeinrichtung und ihrer Anordnung zwischen der Grundeinrichtung und der Lastauflageeinrichtung,
- Figur 4: ein der Figur 3 ähnliches Detail in einem größeren Maßstab zur Verdeutlichung des Bewegungsablaufes der Hebeeinrichtung bzw. der Lastauflageeinrichtung in bezug auf die Grundeinrichtung, wobei in Figur 4 außerdem eine Lenksperre bzw. eine Radbremseinrichtung teilweise aufgeschnitten gezeichnet ist, die mit einem zur Lenkeinrichtung benachbarten ersten Rad zusammenwirkt,

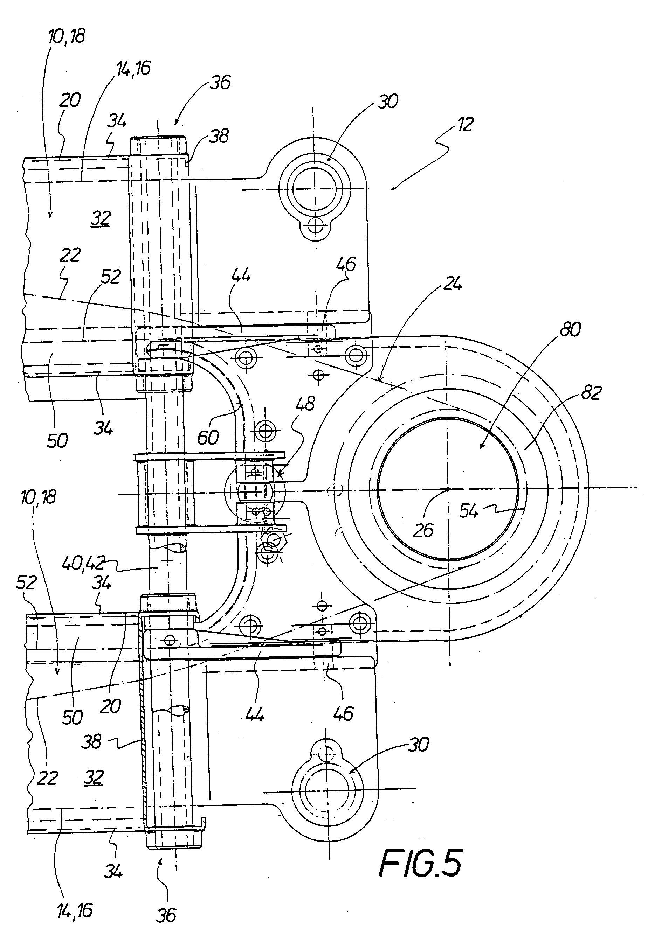

- Figur 5: eine Detailansicht des Hubwagens in Blickrichtung von oben zur Verdeutlichung der Anordnung der Hebeeinrichtung zwischen der Grundeinrichtung und der Lastauflageeinrichtung, wobei aus dieser Zeichnungsfigur die beiden Schenkel der Grund- und der Lastauflageeinrichtung abschnittweise ersichtlich sind, während auf die Darstellung der Lenkeinrichtung und auf die Darstellung der zur Lenkeinrichtung benachbarten ersten Räder verzichtet worden ist,
- Figur 6: eine Darstellung der Lenkeinrichtung von vorne,
- Figur 7: eine teilweise aufgeschnittene Ansicht der Lenkeinrichtung von der Seite,

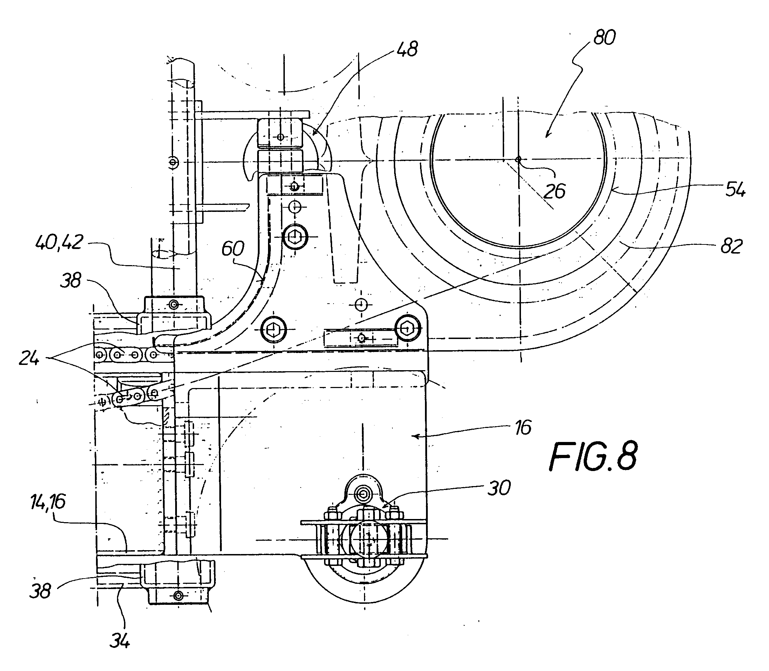

- Figur 8: eine der Figur 5 ähnliche Teilansicht zur Verdeutlichung der Anordnung eines zur Lenkeinrichtung benachbarten ersten frei lenkbaren Rades,
- Figur 9: eine teilweise aufgeschnittene Teilansicht eines Schenkeles der Grundeinrichtung und der Lastauflageeinrichtung in Blickrichtung von oben, zur Verdeutlichung der Anordnung eines entsprechenden zwangsgelenkten zweiten Rades,
- Figur 10: eine teilweise aufgeschnittene Seitenansicht in Blickrichtung des Pfeiles X in Figur 9,
- Figur 11: eine teilweise aufgeschnittene Ansicht in Blickrichtung des Pfeiles XI in Figur 9,
- Figur 12: eine Seitenansicht eines teilweise aufgeschnitten gezeichneten frei lenkbaren ersten Rades an der abschnittweise gezeichneten Grundeinrichtung,
- Figur 13: eine Ansicht in Blickrichtung des Pfeiles XIII in Figur 12,
- Figur 14: eine der Figur 12 ähnliche Ansicht eines freilenkbaren ersten Rades, das mit einer Arretiereinrichtung zum Festsetzen des besagten Rades in einer gewünschten Lenkstellung ausgebildet ist, wobei die Arretiereinrichtung gleichzeitig auch zum Bremsen bzw. Blockieren des besagten Rades in Bezug auf seine Radachse geeignet ist, und
- Figur 15: eine Ansicht des Rades gemäß Figur 14 in Blickrichtung des Pfeiles XV.

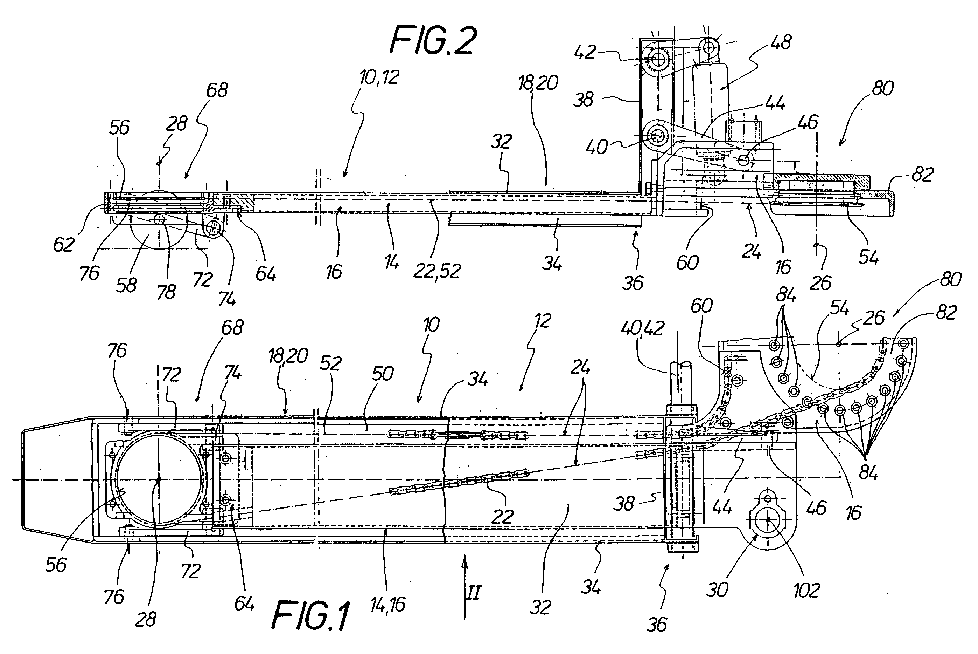

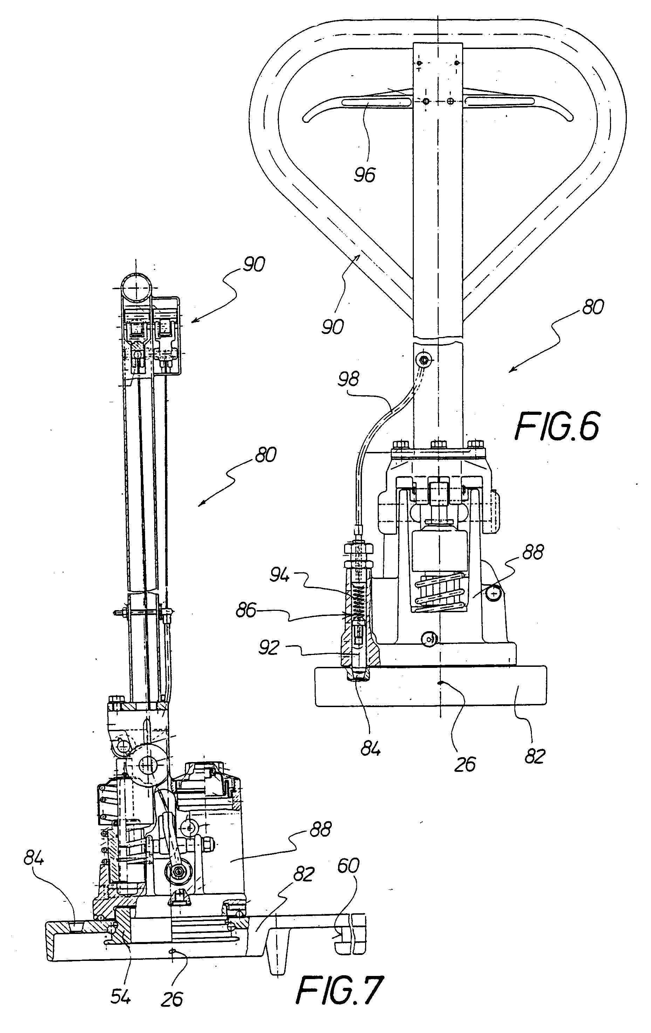

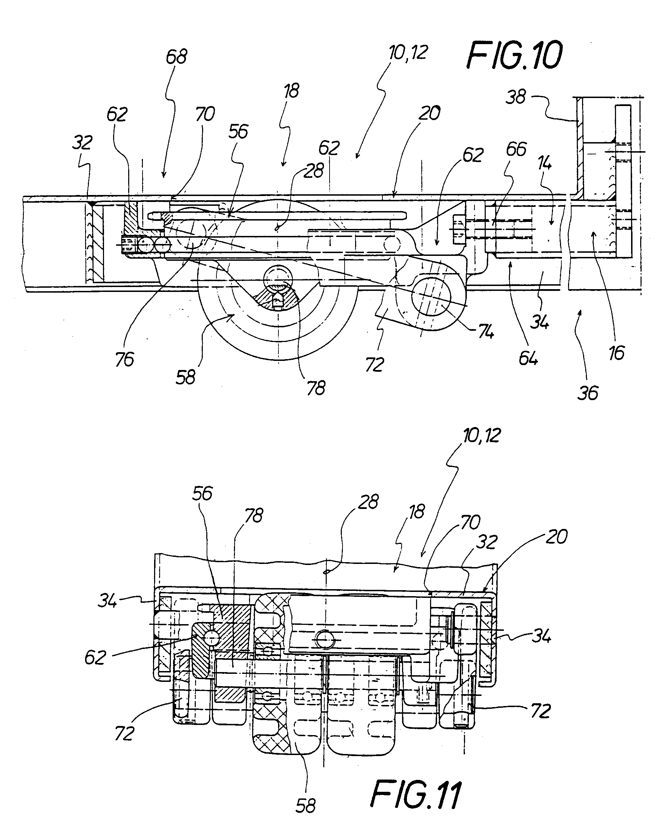

Figur 1 zeigt in einer Ansicht von oben einen Schenkel 10 eines zweischenkeligen Hubwagens 12, wobei von dem Schenkel 10 ein Balkenelement 14 einer Grundeinrichtung 16 und ein zugehöriger Schenkel 18 einer in bezug auf die Grundeinrichtung 16 in der Höhe verstellbaren Lastauflageeinrichtung 20 gezeichnet sind. Das Balkenelement 14 der Grundeinrichtung 16 besteht aus einem Rechteck-Hohlprofilmaterial, durch das sich ein Abschnitt 22 eines Verbindungselementes 24 hindurch erstreckt. Das Verbindungselement 24 ist als Gliederkette ausgebildet und verbindet eine um eine vertikale Lenkachse 26 drehbare, an der Grundeinrichtung 16 gelagerte (in Figur 1 nicht gezeichnete) Lenkeinrichtung mit einem um eine vertikale Lenkachse 28 lenkbar gelagerten (in Figur 1 nicht gezeichneten) zweiten Rad des Hubwagens 12. Die Lenkeinrichtung wird weiter unten in Verbindung mit den Figuren 6 und 7 und ein um die zugehörige Lenkachse 28 zwangslenkbares zweites Rad wird weiter unten in Verbindung mit den Figuren 10 und 11 beschrieben.

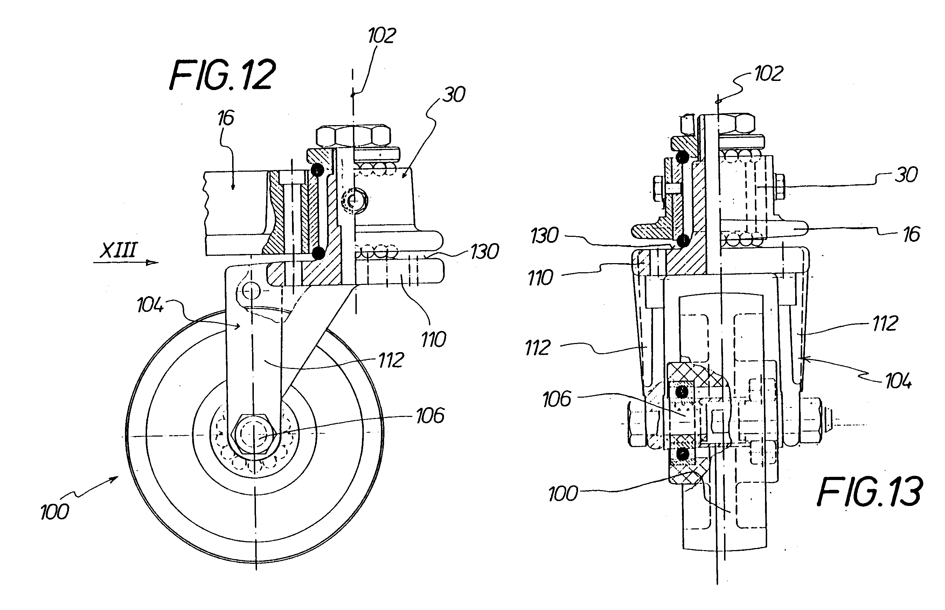

In der Nachbarschaft der um die zugehörige Lenkachse 26 drehbaren Lenkeinrichtung (s. Figuren 6 und 7) ist an der Grundeinrichtung 16 ein Lagerabschnitt 30 für ein erstes Rad (s. die Figuren 12, 13 und 14, 15) vorgesehen.

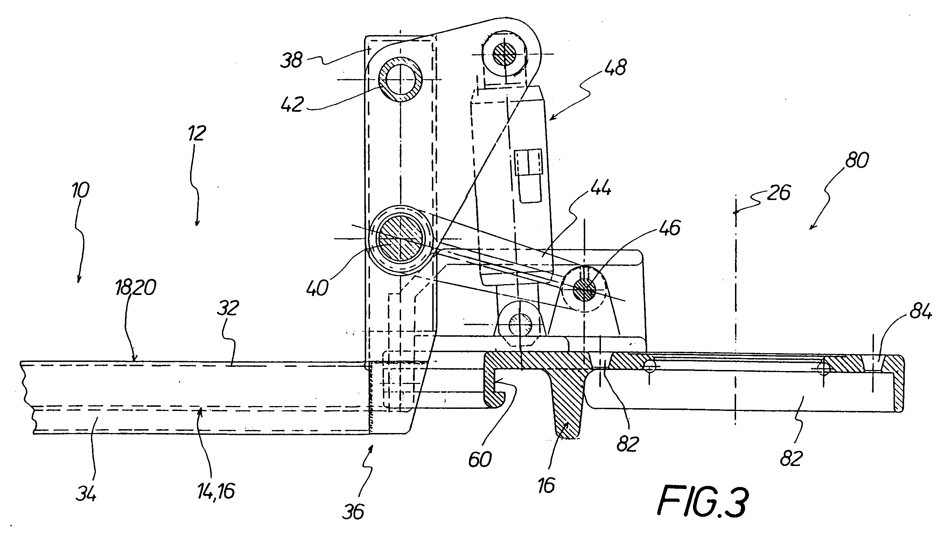

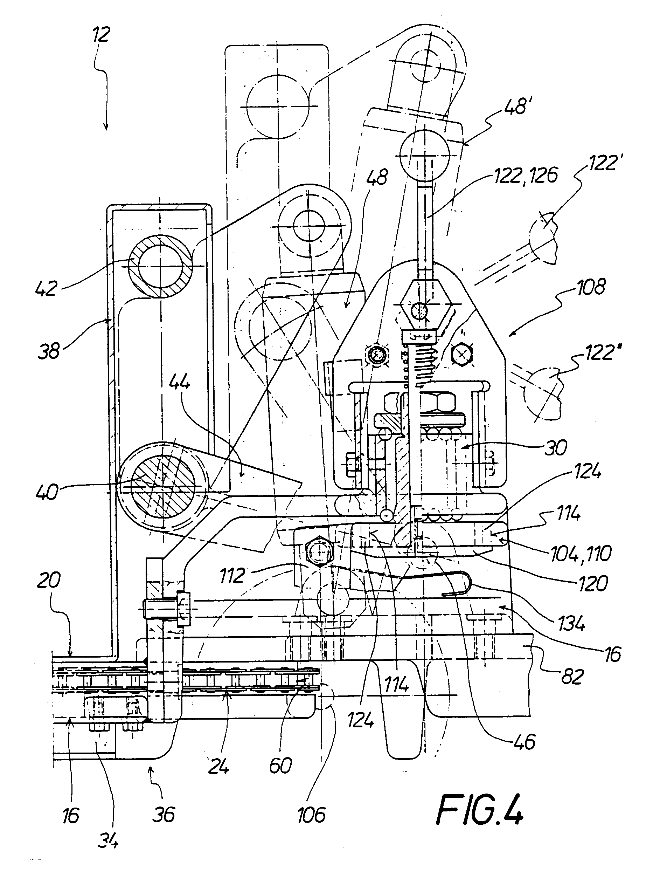

Der/jeder Schenkel 18 der Lastauflageeinrichtung 20 weist ein oberseitiges Auflageteil 32 auf, wie auch aus Figur 2 zu ersehen ist. Vom oberseitigen Auflageteil 32 stehen seitlich Seitenteile 34 nach unten. In den Figuren 1 und 2 ist das oberseitige Auflageteil 32 nur abschnittweise gezeichnet und in Figur 2 sind auch die beiden Seitenteile 34 nur abschnittweise dargestellt. Jeder Schenkel 18 der Lastauflageeinrichtung 20 ist an dem der Lenkeinrichtung bzw. der zugehörigen Lenkachse 26 zugewandten Endabschnitt 36 mit einer Profilsäule 38 ausgebildet, wobei die beiden Profilsäulen 38 der beiden Schenkel 18 durch zwei voneinander beabstandete Achsen 40 und 42 verbunden sind. Jede der beiden Achsen 40 ist mittels eines Hebels 44 an einer Achse 46 angelenkt, die an der Grundeinrichtung 16 ortsfest vorgesehen ist. Die Achse 42 ist mit einer Hebeeinrichtung 48 verbunden, die als Kolbenzylinder-Einheit ausgebildet ist. Die Wirkungsweise der Hebeeinrichtung 48 ist aus den Figuren 3 und 4 ersichtlich.

Der Schenkel 18 der Lastauflageeinrichtung 20 ist in bezug auf den zugehörigen Schenkel bzw. das Balkenelement 14 der Grundeinrichtung 16 derartig vorgesehen, daß zwischen dem Balkenelement 14 und dem innenseitigen Seitenteil 34 des zugehörigen Schenkels 18 der Lastaulageeinrichtung 20 ein Zwischenraum 50 gegeben ist, entlang welchem sich das Verbindungselement 24 mit einem entsprechenden Längenabschnitt 52 erstreckt. Dadurch ergibt sich ein Schutz des Verbindungselementes 24 gegen Einwirkungen von außen bzw.ein Berührungsschutz.. Das Verbindungselement 24 ist um einen Radkranz 54 der Lenkeinrichtung, um einen Radkranz 56 des entsprechenden zwangsgelenkten zweiten Rades 58 (siehe Figur 2) sowie um einen rinnenförmigen Führungsabschnitt 60, der an der Grundeinrichtung 16 in der Nachbarschaft der Lenkeinrichtung bzw. im Verbindungsabschnitt zwischen den beiden Schenkeln 10 des Hubwagens 12 ausgebildet ist, umgelenkt.

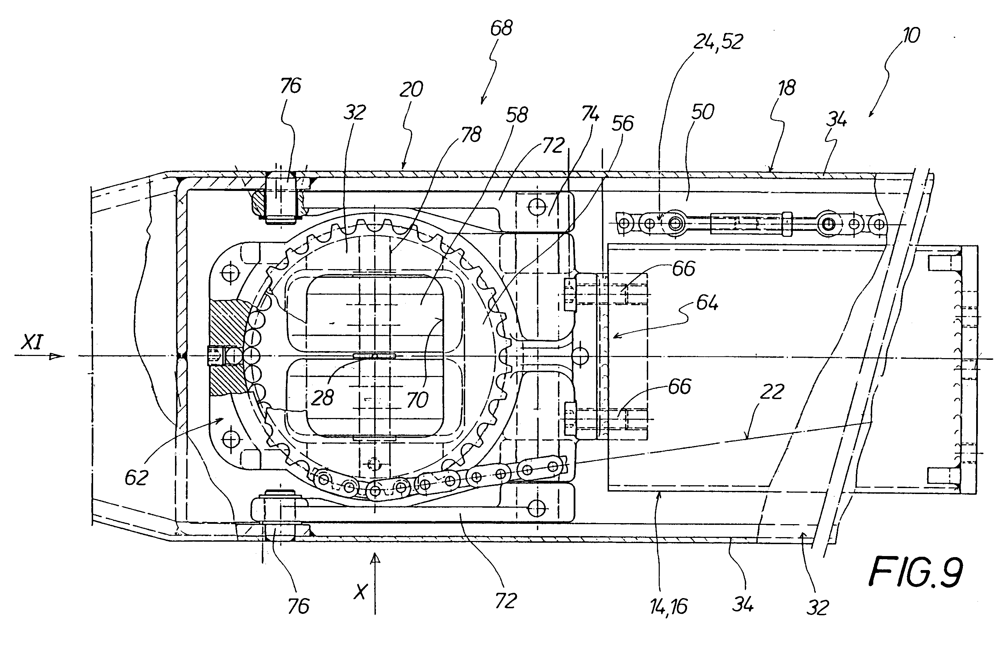

Wie auch aus den Figuren 9, 10 und 11 ersichtlich ist, ist der/jeder Radkranz 56 des entsprechenden zweiten Rades 58 an einer Lagerschale 62 um die zugehörige vertikale Lenkachse 28 drehbar gelagert. Die besagte Lagerschale 62 ist am vorderen Endabschnitt 64 des entsprechenden Balkenelementes 14 mittels Befestigungsschrauben 66 befestigt. Die Lastauflageeinrichtung 20 überdeckt die Lagerschale 62 mit einem Vorderabschnitt 68, wobei das flächige Auflageteil 32 der Lastauflageeinrichtung über dem zugehörigen zweiten Rad 58 mit einem Loch 70 ausgebildet ist, in welches das zweite Rad 58 hineinsteht, wie aus Figur 10 ersichtlich ist. Zwischen der Lagerschale 62 für das zweite Rad 58 und dem Vorderabschnitt 68 der Lastauflageeinrichtung 20 sind Schwenkhebel 72 angeordnet, die um zugehörige Achsen 74 und 76 schwenkbar sind. Die Achse 74 ist zwischen den besagten Schwenkhebeln 72 und der Lagerschale 62 vorgesehen. Die beiden miteinander axial fluchtenden Achsen 76, die als Achsenstummel ausgebildet sind, sind zwischen den Schwenkhebeln 72 und der Lastauflageeinrichtung 20 bzw. deren Vorderabschnitt 68 vorgesehen. Jedes zweite Rad 58 ist um eine zugehörige horizontale Lagerachse 78 drehbar gelagert.

Die Figuren 6 und 7 zeigen eine Lenkeinrichtung 80 mit ihrem Radkranz 54, der an einem Lagerelement 82 um die vertikale Lenkachse 26 drehbar gelagert ist. Das Lagerelement 82 ist mit der Grundeinrichtung 16 des Hubwagens 12 verbunden; es ist mit dem rinnenförmigen Führungsabschnitt 60 für das Verbindungselement 24 ausgebildet, wie aus Figur 7 ersichtlich ist. Das Lagerelement 82 ist mit Löchern 84 ausgebildet, die zur Lenkachse 26 der Lenkeinrichtung 80 konzentrisch und voneinander äquidistant beabstandet vorgesehen sind. Zur Arretierung der Lenkeinrichtung 80 ist eine Arretiereinrichtung 86 vorgesehen, die an der Lenkeinrichtung 80 ausgebildet ist. Die Lenkeinrichtung 80 weist ein Fußteil 88 auf, das mit dem Radkranz 54 der Lenkeinrichtung 80 verdrehfest verbunden ist. Vom Fußteil 88 der Lenkeinrichtung 80 steht ein Hand- bzw. Betätigungsgriff 90 nach oben, mit welchem nicht nur eine Lenkung des Hubwagens 12, sondern auch eine Betätigung seiner Hebeeinrichtung 80 in an sich bekannter Weise möglich ist.

Die Arretiereinrichtung 86 weist ein federndes Einrastelement 92 (siehe Figur 6) auf, das mittels eines Federelementes 94 in eines der Löcher 84 im Lagerelement 82 einrastbar ist, um die Lenkeinrichtung 80 in bezug auf die Grundeinrichtung 16 des Hubwagens 12 festzusetzen. Ein am Hand- bzw. Betätigungsgriff 90 vorgesehenes Betätigungsorgan 96 ist mittels eines Bowdenzuges 98 mit dem federnden Einrastelement 92 verbunden. Durch entsprechende Betätigung des Betätigungsorganes 96 ist es möglich, das Einrastelement 92 aus dem entsprechenden Loch 84 zurückzuziehen, wobei gleichzeitig das Federelement 94 mechanisch gespannt wird. Wird das Betätigungsorgan 96 dann wieder losgelassen, so kann sich das Federelement 94 entspannen, wenn das Einrastelement 92 mit einem der Löcher 84 fluchtet, so daß das Einrastelement 92 dann wieder in eines der Löcher 84 einrasten kann, um die Lenkeinrichtung 80 zu arretieren.

Die Figuren 12 und 13 zeigen ein zur Lenkeinrichtung 80 (siehe Figuren 6 und 7) benachbartes freilenkbares erstes Rad 100, das am Lagerabschnitt 30 (siehe auch Figur 1) um eine vertikale Lenkachse 102 frei lenkbar ist. Jedes erste Rad 100 ist an einer Winkelgabel 104 um eine horizontale Lagerachse 106 drehbar gelagert, wobei die horizontale Lagerachse 106 gegen die vertikale Lenkachse 102 versetzt ist, um eine zuverlässige freie Lenkbarkeit jedes ersten Rades 100 zu gewährleisten.

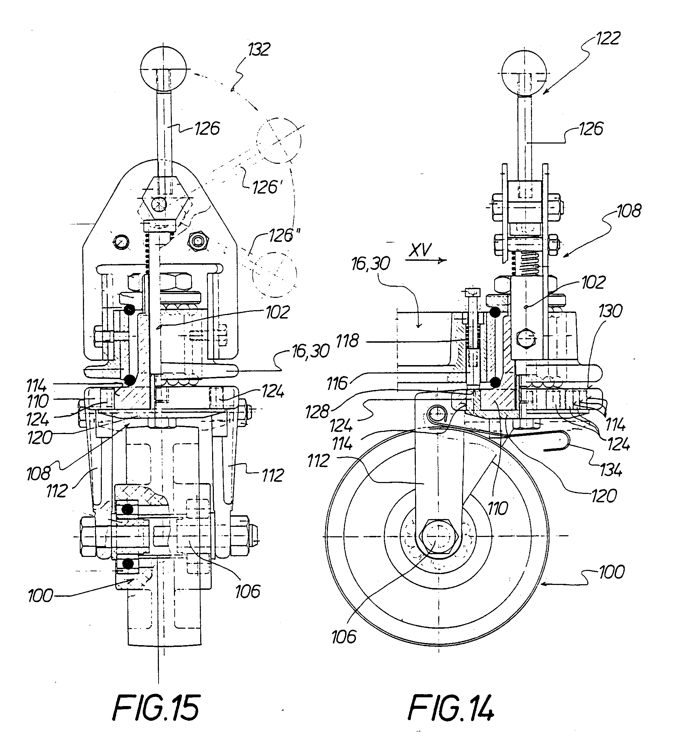

In den Figuren 14 und 15 ist ein frei lenkbares erstes Rad 100 gezeichnet, das sich von dem in den Figuren 12 und 13 dargestellten ersten Rad 100 insbesondere dadurch unterscheidet, daß es mit einer Lenksperre 108 ausgebildet ist. Bei dieser Ausbildung des ersten Rades 100 ist die ein oberseitiges Plattenteil 110 und von diesem nach unten stehende Schenkel 112 aufweisende Winkelgabel 104 im Plattenteil 110 mit Durchgangslöchern 114 ausgebildet, die zur Lenkachse 102 konzentrisch und voneinander gleichmäßig beabstandet vorgesehen sind. An der Grundeinrichtung 16 bzw. an deren Lagerabschnitt 30 ist ein federndes Organ 116 vorgesehen, das mittels eines Federelementes 118 gegen das oberseitige Plattenteil 110 der entsprechenden Winkelgabe 104 des ersten Rades 100 gezwängt wird. Auf der dem besagten federnden Organ 116 gegenüberliegenden Seite des Plattenteiles 110 ist ein Tellerelement 120 vorgesehen, das mit einer Betätigungseinrichtung 122 verbunden ist. Vom Tellerelement 120 stehen oberseitig Finger 124 weg, die gleich verteilt sind, wie die Durchgangslöcher 114 im oberseitigen Plattenteil 110 der Winkelgabel 104. Die Finger 124 füllen die Durchgangslöcher 114 bündig aus, wenn sich die Betätigungseinrichtung 122 in einer Freilenkstellung befindet, wie in den Figuren 14 und 15 durch die vertikal nach oben stehende Position eines Betätigungsgriffes 126 dargestellt ist. In der besagten bündigen Stellung der Finger 124 bilden deren vorderseitige Stirnflächen 128 mit der Oberseite 130 des Plattenteiles 110 eine gemeinsame ebene Fläche, auf welcher das federnde Organ 116 federnd anliegt. Durch die Ausbildung dieser ebenen Gesamtfläche ist es dem ersten Rad 100 möglich, sich um die zugehörige vertikale Lenkachse 102 frei zu drehen. Wird die Betätigungseinrichtung 122 von dieser Freilenkstellung in eine Lenksperrstellung in Richtung des Pfeiles 132 (siehe Figur 15) verstellt, was durch die Bezugsziffer 126' für den Betätigungsgriff in Figur 15 angedeutet ist, so wird das Tellerelement 120 mit seinen Fingern 124 nach unten bewegt, d.h. es werden die Finger 124 in bezug auf die Durchgangslöcher 114 zurückversetzt, so daß das federnd vorgespannte Organ 116 in eines der nun freien Durchgangslöcher 114 einrasten kann. Dadurch wird folglich die freie Lenkbarkeit des entsprechenden ersten Rades 100 ausgeschaltet, bis der Betätigungsgriff 126 von dieser Lenksperrstellung wieder in die Freilenkstellung zurückgestellt wird.

In Figur 15 ist eine weitere Stellung des Betätigungsgriffes durch die Bezugsziffer 126'' angedeutet. In dieser Stellung wird das Tellerelement 120 noch weiter nach unten gedrückt, so daß es mit einem Bremselement 134 in Wirkverbindung kommt, das gegen den Umfang des Rades 100 gedrückt wird. Hierdurch ergibt sich folglich eine Bremse, d.h. eine Arretierung des ersten Rades 100 um seine horiziontale Lagerachse 106 herum.

Gleiche Einzelheiten sind in den verschiedenen Zeichnungsfiguren jeweils mit denselben Bezugsziffern bezeichnet, so daß es sich erübrigt, in Verbindung mit allen diesen Figuren alle Einzelheiten jeweils detailliert zu beschreiben.

## Patentansprüche

1. Hubwagen mit einer Grundeinrichtung (16), einer Lastauflageeinrichtung (20), die an der Grundeinrichtung (16) angeordnet und mittels einer Hebeeinrichtung (48) in bezug auf die Grundeinrichtung (16) höhenverstellbar ist, einer Lenkeinrichtung (80), die zum Lenken des Hubwagens (12) und zur Betätigung der Hebeeinrichtung (48) vorgesehen ist, und einem Verbindungselement (24), mittels welchem die Lenkeinrichtung (80) mit Rädern der Grundeinrichtung (16) zu deren Zwanglenkung verbunden ist, wobei am rückseitigen Endabschnitt der Grundeinrichtung (16) in der Nachbarschaft der Lenkeinrichtung (80) erste Räder (100) um vertikale Lenkachsen (102) drehbar gelagert sind und am vorderseitigen Endabschnitt der Grundeinrichtung (16) mindestens ein zweites Rad (58) um eine vertikale Lenkachse (28) drehbar gelagert ist,
**dadurch gekennzeichnet**,
daß nur das mindestens eine am vorderseitigen Endabschnitt der Grundeinrichtung (16) vorgesehene zweite Rad (58) zur Zwangslenkung mittels des Verbindungselementes (24) mit der Lenkeinrichtung (80) verbunden ist, daß die zur Lenkeinrichtung (80) benachbarten ersten Räder (100) als frei lenkbare Räder mit einer gegen die zugehörige vertikale Lenkachse (26) seitlich versetzten horizontalen Lagerachse (106) ausgebildet sind, und daß die Lenkeinrichtung (80) mittels einer Arretiereinrichtung (86) an der Grundeinrichtung (16) entsprechend einem gewünschten Lenkeinschlag festsetzbar ist.

2. Hubwagen nach Anspruch 1,
**dadurch gekennzeichnet**,
daß die Grundeinrichtung (16) ein- oder zweischenkelig ausgebildet ist, wobei der/jeder Schenkel ein Balkenelement (14) mit einem Rechteck-Hohlprofil aufweist, und daß die Lastauflageeinrichtung (20) der Grundeinrichtung (16) entsprechend ein- oder zweischenkelig ausgebildet ist, wobei der entsprechende Schenkel (18) der Lastauflageeinrichtung (20) ein oberseitiges Auflageteil (32) und von diesem seitlich nach untenstehende Seitenteile (34) aufweist, wobei der/jeder Schenkel (18) der Lastauflageeinrichtung (20) in bezug auf den zugehörigen Schenkel der Grundeinrichtung (16) derartig vorgesehen ist, daß zwischen den Seitenteilen (34) des mindestens einen Schenkels (18) der Lastauflageinrichtung (20) und dem entsprechenden Balkenelement (14) der Grundeinrichtung (16) ein Zwischenraum (50) gegeben ist, entlang welchem sich das Verbindungselement (24) mit einem entsprechenden Längenabschnitt (52) erstreckt.

3. Hubwagen nach Anspruch 1 und 2,
**dadurch gekennzeichnet**,
daß das/jedes zweite Rad (58) an einem Radkranz (56) um eine horizontale Lagerachse (78) drehbar gelagert ist, der an einer Lagerschale (62) um die zugehörige vertikale Lenkachse (28) drehbar gelagert ist, wobei die Lagerschale (62) am vorderen Ende (64) des entsprechenden Balkenelementes (14) der Grundeinrichtung (16) befestigt ist und die Lastauflageeinrichtung (20) die Lagerschale (62) mit einem Vorderabschnitt (68) überdeckt und das flächige Auflageteil (32) im Bereich über dem zugehörigen zweiten Rad (58) mit einem Loch (70) ausgebildet ist.

4. Hubwagen nach Anspruch 3,
**dadurch gekennzeichnet**,
daß der Vorderabschnitt (68) der Lastauflageeinrichtung (20) mit der zugehörigen Lagerschale (62) für das entsprechende zweite Rad (58) durch Schwenkhebel (72) verbunden ist.

5. Hubwagen nach Anspruch 3,
**dadurch gekennzeichnet**,
daß der/jeder Radkranz (54, 56) ein Zahnradkranz ist, in welchen eine das Verbindungselement (24) bildende endlose Gliederkette eingreift, wobei das Niveau der Zahnung der Zahnradkränze an das Niveau des Rechteck-Hohlprofils des entsprechenden Balkenelementes (14) der Grundeinrichtung (16) angepaßt ist und das Verbindungselement (24) bzw. die Gliederkette sich mit einem entsprechenden Längenabschnitt (22) durch das/jedes Balkenelement (14) hindurch erstreckt.

6. Hubwagen nach einem der vorhergehenden Ansprüche,
**dadurch gekennzeichnet**,
daß die Lenkeinrichtung (80) einen an einem mit der Grundeinrichtung (16) verbundenen Lagerelement (82) um eine vertikale Lenkachse (26) drehbaren Radkranz (54) aufweist, der mit dem Verbindungselement (24) verbunden ist, wobei der Radkranz (54) mit einem Fußteil (88) der Lenkeinrichtung (80) verbunden ist und die Arretiereinrichtung (86) zwischen dem Fußteil (88) und dem Lagerelement (82) vorgesehen ist.

7. Hubwagen nach Anspruch 6,
**dadurch gekennzeichnet**,
daß das Lagerteil (82) mit Löchern (84) ausgebildet ist, die zur Lenkachse (26) konzentrisch vorgesehen und voneinander gleichmäßig beabstandet sind, und daß das Fußteil (88) der Lenkeinrichtung (80) mit einem federnden Einrastelement (92) der Arretiereinrichtung (86) ausgebildet ist, das mit einem an einem Hand- bzw. Betätigungsgriff (90) der Lenkeinrichtung (80) vorgesehenen Betätigungsorgan (96) verbunden und mit dem Betätigungsorgan (96) zwischen einer in eines der Löcher (84) einrastenden Arretierstellung und einer Freigabestellung verstellbar ist.

8. Hubwagen nach einem der vorhergehenden Ansprüche,
**dadurch gekennzeichnet**,
daß die Grundeinrichtung (16) mit einem rinnenförmigen Führungsabschnitt (60) zur geeigneten Umlenkung und Führung des Verbindungselementes (24) ausgebildet ist.

9. Hubwagen nach einem der vorhergehenden Ansprüche,
**dadurch gekennzeichnet**,
daß jedes zur Lenkeinrichtung (80) benachbarte erste Rad (100) mit einer Lenksperre (108) ausgebildet ist, die mittels einer von der jeweiligen Radstellung unabhängigen Betätigungseinrichtung (122) zwichen einer Freilenkstellung und einer Lenksperrstellung verstellbar ist.

10. Hubwagen nach Anspruch 9,
**dadurch gekennzeichnet**,
daß jede Lenksperre (108) mit einer Radbremseinrichtung (134) in Wirkverbindung bringbar ist.

11. Hubwagen nach Anspruch 9 oder 10,
**dadurch gekennzeichnet**,
daß jedes freilenkbare erste Rad (100) an einer an der Grundeinrichtung (16) um die zugehörige vertikale Lenkachse (102) drehbar gelagerten Winkelgabel (104) gelagert ist, die an einem oberseitigen Plattenteil (110) Durchgangslöcher (114) aufweist, die zur vertikalen Lenkachse (102) konzentrisch und voneinander äquidistant beabstandet vorgesehen sind, daß an der Grundeinrichtung (16) ein federndes Organ (116) vorgesehen ist, das zwischen der Freilenkstellung und der Lenksperrstellung verstellbar ist, und daß auf der dem federnden Organ (116) gegenüberliegenden Seite des Plattenteils (110) der Winkelgabel (104) ein Tellerelement (120) vorgesehen ist, das mit der von der jeweiligen Radstellung unabhängigen Betätigungseinrichtung (122) verbunden ist und das Finger (124) aufweist, die in der Freilenkstellung die Durchgangslöcher (114) bündig ausfüllen und die in der Lenksperrstellung gegen die Durchgangslöcher (114) zurückversetzt sind, so daß das federnde Organ (116) in eines der Durchgangslöcher (114) einrasten kann.

12. Hubwagen nach Anspruch 11,
**dadurch gekennzeichnet**,
daß die mit dem Tellerelement (120) verbundene Betätigungseinrichtung (122) zwichen der Freilenkstellung, der Lenksperrstellung und einer Bremsstellung verstellbar ist, wobei das Tellerelement (120) in der Bremsstellung mit einem Bremselement (134) des entsprechenden ersten Rades (100) zusammenwirkt.

## Claims

1. Lift truck having a basic apparatus (16), having a load-supporting apparatus (20) which is arranged on the basic apparatus (16) and can be vertically adjusted with respect to the basic apparatus (16) by means of a lifting apparatus (48), having a steering apparatus (80) which is provided in order to steer the lift truck (12) and to actuate the lifting apparatus (48), and having a connecting element (24) by means of which the steering apparatus (80) is connected to wheels of the basic apparatus (16) for the positive steering thereof; first wheels (100) being mounted, such that they can rotate about vertical steering axes (102), at the rear end portion of the basic apparatus (16) in the vicinity of the steering apparatus (80); and at least one second wheel (58) being mounted, such that it can rotate about a vertical steering axis (28), at the front end portion of the basic apparatus (16); characterized in that only the at least one second wheel (58) provided at the front end portion of the basic apparatus (16) is connected, by means of the connecting element (24), to the steering apparatus (80) for positive steering; in that the first wheels (100) adjacent to the steering apparatus (80) are designed as freely steerable wheels with a horizontal bearing spindle (106) which is offset laterally with respect to the appertaining vertical steering axis (26); and in that the steering apparatus (80) can be fixed, by means of an arresting device (86), on the basic apparatus (16) in accordance with a desired steering angle.

2. Lift truck according to Claim 1, characterized in that the basic apparatus (16) is designed with one or two legs, the/each leg exhibiting a bar element (14) with a rectangular hollow profile; and in that the load-supporting apparatus (20) of the basic apparatus (16) is correspondingly designed with one or two legs, the corresponding leg (18) of the load-supporting apparatus (20) exhibiting an upper-side support part (32) and side parts (34) which project down laterally therefrom, the/each leg (18) of the load-supporting apparatus (20) being provided with respect to the appertaining leg of the basic apparatus (16) such that an interspace (50) results between the side parts (34) of the at least one leg (18) of the load-supporting apparatus (20) and the corresponding bar element (14) of the basic apparatus (16), along which interspace (50) the connecting element (24) extends by means of a corresponding length portion (52).

3. Lift truck according to Claims 1 and 2, characterized in that the/each second wheel (58) is mounted, so that it can rotate about a horizontal bearing spindle (78), on a wheel sprocket (56) which is mounted on a bearing shell (62) such that it can rotate about the appertaining vertical steering axis (28), the bearing shell (62) being fastened at the front end (64) of the corresponding bar element (14) of the basic apparatus (16), the load-supporting apparatus (20) covering over the bearing shell (62) with a front portion (68), and the sheet-like support part (32) being designed with a hole (70) in the region above the appertaining second wheel (58).

4. Lift truck according to Claim 3, characterized in that the front portion (68) of the load-supporting apparatus (20) is connected by pivot levers (72) to the appertaining bearing shell (62) for the corresponding second wheel (58).

5. Lift truck according to Claim 3, characterized in that the/each wheel sprocket (54, 56) is a toothed wheel sprocket into which an endless link chain, which forms the connecting element (24), engages, the level of the toothing of the toothed wheel sprockets being adapted to the level of the rectangular hollow profile of the corresponding bar element (14) of the basic apparatus (16), and the connecting element (24) or the link chain extending through the/each bar element (14) by means of a corresponding length portion (22).

6. Lift truck according to one of the preceding claims, characterized in that the steering apparatus (80) exhibits a wheel sprocket (54) which can rotate, on a bearing element (82) connected to the basic apparatus (16), about a vertical steering axis (26) and is connected to the connecting element (24), the wheel sprocket (54) being connected to a foot part (88) of the steering apparatus (80), and the arresting device (86) being provided between the foot part (88) and the bearing element (82).

7. Lift truck according to Claim 6, characterized in that the bearing part (82) is designed with holes (84) which are provided concentrically with respect to the steering axis (26) and are spaced apart uniformly from one another; and in that the foot part (88) of the steering apparatus (80) is designed with a resilient latch-in element (92) of the arresting device (86), which is connected to an actuating member (96) provided on a hand grip or actuating grip (90) of the steering apparatus (80), and can be adjusted by means of the actuating member (96) between an arresting position latching into one of the holes (84), and a release position.

8. Lift truck according to one of the preceding claims, characterized in that the basic apparatus (16) is designed with a channel-shaped guide portion (60) for a suitable deflection and guidance of the connecting element (24).

9. Lift truck according to one of the preceding claims, characterized in that each first wheel (100) adjacent to the steering apparatus (80) is designed with a steering inhibitor (108) which, by means of an actuating device (122) which is independent of the respective wheel position, can be adjusted between a free-steering position and an inhibited-steering position.

10. Lift truck according to Claim 9, characterized in that each steering inhibitor (108) can be brought into operative connection with a wheel-braking device (134).

11. Lift truck according to Claim 9 or 10, characterized in that each freely steerable first wheel (100) is mounted on an angle fork (104) which is mounted, such that it can rotate about the appertaining vertical steering axis (102), on the basic apparatus (16) and exhibits on an upper-side plate part (110) through-passage holes (114) which are provided concentrically with respect to the vertical steering axis (102) and spaced apart from one another in an equidistant manner; in that there is provided on the basic apparatus (16) a resilient member (116) which can be adjusted between the free-steering position and the inhibited-steering position; and in that there is provided, on that side of the plate part (110) of the angle fork (104) which is located opposite the resilient member (116), a plate element (120) which is connected to the actuating device (122), is independent of the respective wheel position, and exhibits fingers (124) which in the free-steering position fill the through-passage holes (114) in a flush manner and in the inhibited-steering position are set back with respect to the through-passage holes (114), with the result that the resilient member (116) can latch into one of the through-passage holes (114).

12. Lift truck according to Claim 11, characterized in that the actuating device (122) connected to the plate element (120) can be adjusted between the free-steering position, the inhibited-steering position, and a braking position, the plate element (120) in the braking position interacting with a braking element (134) of the corresponding first wheel (100).

## Revendications

1. Chariot élévateur comportant une base (16), un système récepteur de charge (20) adapté à la base (16) et réglable en hauteur par rapport à la base (16) grâce à un dispositif de levage (48), un système de direction (80), prévu pour manier le chariot (12) et actionner le dispositif de levage (48) et un élément de liaison (24) par lequel le système de direction (80) est relié à des roues de la base (16) en vue de leur commande positive, dans lequel, dans la section terminale du côté arrière de la base (16) au voisinage du système de commande (80) est montée une première roue (100) pivotante autour d'un axe vertical d'orientation (102), et dans la section terminale du côté avant de la base (16) est montée au moins une seconde roue (58) pivotante autour d'un axe vertical d'orientation (28),
**caractérisé en ce que**
seule la seconde roue (58) prévue dans la section terminale avant de la base (16) est reliée au système de direction (80) en vue d'une commande positive par l'élément de liaison (24), la première roue (100) voisine du système de direction (80) est agencée en tant que roue libre orientable avec un axe horizontal de roulement (106) décalé latéralement par rapport à l'axe vertical d'orientation (26), et le système de direction (80) est immobilisable par rapport à la base (16) de façon correspondant à une position de direction désirée.

2. Chariot selon la revendication 1, caractérisé en ce que la base (16) comporte une ou deux branches, dont chacune est constituée par une poutre (14) en profilé creux à section carrée, et en ce que le système récepteur de charge (20) comporte, de façon correspondante à la base (16) une ou deux branches, chaque branche (18) correspondante du système récepteur de charge (20) se composant d'une partie réceptrice (32) du côté supérieur et de parties latérales (34) la prolongeant latéralement vers le bas, les branches (18) du système récepteur de charge (20) étant prévues par rapport aux branches correspondantes de la base (16) de manière telle que, entre les parties latérales (34) d'au moins une branche (18) du système récepteur de charge (20) et de la poutre (14) correspondante de la base (16) subsiste un espace intermédiaire (50) le long duquel s'étend une section longitudinale correspondante (52) de l'élément de liaison (24).

3. Chariot élévateur selon les revendications 1 et 2, caractérisé en ce que chaque seconde roue (58) est montée pivotante sur un axe horizontal (78) porté par une couronne dentée (56) montée elle-même pivotante sur l'axe vertical (28) porté par un plateau de réception (62), lequel plateau de réception (62) est fixé à l'extrémité avant (64) de la poutre (14) correspondante de la base (16), et le système récepteur de charge (20) recouvre le plateau de réception (62) par sa portion avant (68) et l'élément récepteur (32) correspondant présente un trou (70) dans la région de la seconde roue (58) correspondante.

4. Chariot élévateur selon la revendication 3, caractérisé en ce que la portion avant (68) du système récepteur de charge (20) est reliée au plateau de réception (62) pour la seconde roue (58) correspondante par un levier basculant (72).

5. Chariot élévateur selon la revendication 3, caractérisé en ce que chaque couronne dentée (54, 56) est une couronne à crémaillère dans laquelle engrène une chaîne à maillons sans fin constituant l'élément de liaison (24), le niveau de la denture de la couronne à crémaillère étant adapté au niveau du profilé creux carré de la poutre (14) correspondante, et l'élément de liaison (24), c'est-à-dire la chaîne à maillons s'étend à travers cette poutre (14) sur une portion de longueur correspondante.

6. Chariot élévateur selon l'une quelconque des revendications précédentes, caractérisé en ce que le système de direction (80) comporte une couronne dentée (54) pivotante autour d'un axe vertical (26) porté par un élément récepteur (82) relié à la base (16), cette couronne étant reliée à l'élément de liaison (24), et étant reliée à un pied du système de direction (80), et le dispositif d'arrêt (86) est prévu entre le pied (86) et l'élément récepteur (82).

7. Chariot élévateur selon la revendication 6, caractérisé en ce que l'élément récepteur (82) présente des trous (84) concentriques à l'axe de direction (26) et espacés régulièrement l'un de l'autre, et en ce que le pied (88) du système de direction (80) comporte un élément de butée élastique (92) du dispositif d'arrêt (86) relié par une manette de commande (90) du système de direction (80) à l'organe d'actionnement (96) et, au moyen de cet organe d'actionnement (96), est réglable entre une position d'arrêt s'enclenchant dans le trou (84) et une position libre.

8. Chariot élévateur selon l'une quelconque des revendications précédentes, caractérisé en ce que la base (16) comporte une échancrure de guidage (60) en forme de rainure pour le guidage de l'élément de liaison (24).

9. Chariot élévateur selon l'une quelconque des revendications précédentes, caractérisé en ce que chacune des premières roues (100) voisines du système de direction (80) comporte un dispositif de verrouillage directionnel (108) qui, par l'intermédiaire d'un dispositif d'actionnement (122) indépendant de chaque position de la roue, est réglable entre une position de direction libérée et une position de direction verrouillée.

10. Chariot élévateur selon la revendication 9, caractérisé en ce que chaque dispositif de verrouillage directionnel (108) peut être mis en relation avec un dispositif de freinage de roue (134).

11. Chariot élévateur selon la revendication 9 ou 10, caractérisé en ce que chaque première roue (100) libre en direction est montée pivotante par rapport à la base (16) sur un axe vertical (102) porté par rapport à la base (16) sur un axe vertical (102) porté par une fourche angulaire (104) présentant dans une plaque porté par une fourche angulaire (104) présentant dans une plaque supérieure (110) des trous (114) prévus pour l'axe vertical (102) concentriques et équidistants les uns des autres, en ce que la base (16) comporte un organe élastique (116) réglable entre la position de direction libérée et la position de direction verrouillée, et en ce que sur l'organe élastique (116) est prévu un élément (120) en forme d'assiette du côté de la fourche (104) faisant face au côté opposé de la plaque (110), cet élément (120) étant relié avec le dispositif d'actionnement (122) indépendant de la position de la roue correspondante et présentant un doigt (124) qui vient s'insérer dans le trou (114) et l'obstruer dans la position de direction libérée et qui, dans la position de direction verrouillée est extrait du trou (114) de sorte que l'organe élastique (116) peut se verrouiller dans l'un des trous (114).

12. Chariot élévateur selon la revendication 11, caractérisé en ce que le dispositif d'actionnement (122) relié à l'élément en forme d'assiette (120) est réglable entre la position de direction libérée, la position de direction verrouillée et une position de freinage, l'élément en forme d'assiette (120), en position de freinage, coopérant avec un élément de freinage (134) de la première roue (100) correspondante.
